(19) Europäisches Patentamt / European Patent Office / Office européen des brevets

(11) **EP 4 445 113 B1**

(12) **EUROPEAN PATENT SPECIFICATION**

(45) Date of publication and mention
of the grant of the patent:
**13.05.2026  Bulletin 2026/20**

(21) Application number: **22826107.9**

(22) Date of filing: **01.12.2022**

(51) International Patent Classification (IPC):
*G01N 1/20* (2006.01)

(52) Cooperative Patent Classification (CPC):
**G01N 1/2035;** G01N 2001/105; G01N 2001/2064;
G01N 2001/2071

(86) International application number:
**PCT/EP2022/084097**

(87) International publication number:
**WO 2023/104637 (15.06.2023 Gazette 2023/24)**

(54) **VARIABLE VOLUME AND VARIABLE PRESSURE SAMPLING CONTAINER**

PROBENAHMEBEHÄLTER MIT VARIABLEM VOLUMEN UND VARIABLEM DRUCK

RÉCIPIENT D'ÉCHANTILLONNAGE À VOLUME ET PRESSION VARIABLES

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority:  **06.12.2021  EP 21306714**

(43) Date of publication of application:
**16.10.2024  Bulletin 2024/42**

(73) Proprietor: **Opta-Periph SAS**
**33064 Bordeaux (FR)**

(72) Inventor: **BARERE, Pierre**
**33120 Arcachon (FR)**

(74) Representative: **Mathisen & Macara LLP**
**Charta House**
**30-38 Church Street**
**Staines-upon-Thames TW18 4EP (GB)**

(56) References cited:
WO-A1-2012/080619      WO-A1-2019/144791
US-A1- 2011 192 237      US-A1- 2018 283 994
US-B1- 7 555 965

• **"LNG CUSTODY TRANSFER HANDBOOK", 1
May 2021, GIIGNL, article ANONYMOUS: "LNG
CUSTODY TRANSFER HANDBOOK", pages: 41 -
55, XP055922661**
• **ANONYMOUS: "Refrigerated light hydrocarbon
fluids - Sampling of liquefied natural gas -
Continuous and intermittent methods", 1
January 2007 (2007-01-01), pages 1 - 30,
XP055922670, Retrieved from the Internet
<URL:https://fdocuments.in/document/
bs-iso-8943-2007.html> [retrieved on 20220518]**

## EP 4 445 113 B1

**Description**

The present techniques relate to the field of capturing and storing samples of cryogenic liquids. The present techniques also relate to the field of accumulating and storing grab samples of natural gas. More particularly, the techniques relate to a variable volume and variable pressure sampling container for: capturing samples of cryogenic liquids and storing the samples in the same container; or accumulating grab samples of natural gas and storing the samples in the same container.

A known liquefied natural gas (LNG) spot sampling device is disclosed in "GIIGNL HANDBOOK" publication number 6, at paragraph 6.9, dated May 2021. A quantity of LNG from a process line is injected into a chamber, which had previously been cooled down by LNG circulation, to partially fill the chamber with LNG. The chamber is then isolated. The LNG sample is brought to ambient temperature and vaporises, so that the regasified LNG fills the whole volume of the chamber, the chamber being designed to withstand the pressure increase. Gas samples are then withdrawn from the chamber via a pressure reducing valve to fill gas sampling containers. Disadvantages associated with above-described LNG spot sampling device are:

- the gas sample to be withdrawn via the sampling container requires complex purging and filling procedures to preserve the integrity of the sample; and
- it is hard to control precisely the quantity of LNG injected into the chamber.

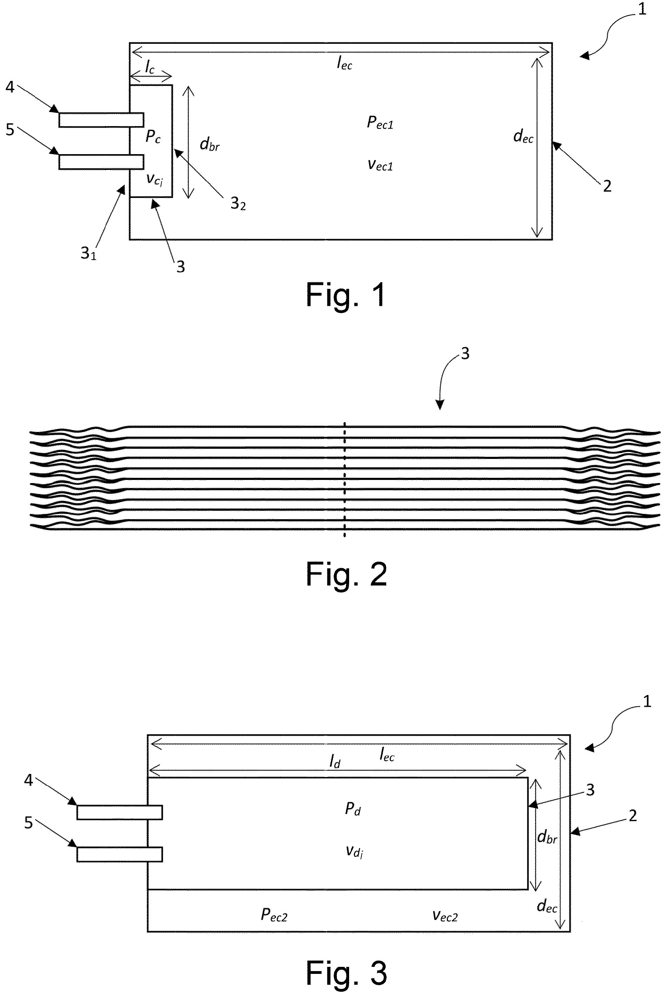

A known device for accumulating and storing grab samples of natural gas is disclosed in ISO 8943 2017 entitled: Refrigerated light hydrocarbon fluids - Sampling of liquefied natural gas - Continuous and intermittent methods. Figure 3 of ISO 8943 2017 illustrates a pump or compressor item 10 generating gas sample grabs which are accumulated in a piston cylinder under constant pressure conditions. The constant pressure/floating piston (CP) cylinder is counterbalanced by pressure from pre-charged helium in the opposite chamber. A disadvantage associated with a constant pressure container constituted by a piston cylinder is:

- the sample expansion in one side of the piston is required to be counterbalanced by a neutral gas in the other side of the piston, however because the moving piston requires seals and grease, it does not have absolute tightness.

Further related devices and methods are known from WO 2019/144791 A1 and US 2018/0283994 A1.

A sampling method and container according to the present invention are defined by claims 1 and 10.

According to a first technique, there is provided variable volume and variable pressure sampling container. The container comprises a bellows receptacle comprising an inlet valve and an outlet valve; and a pressurised external chamber surrounding the bellows receptacle and configured to maintain the bellows receptacle in a compressed state when a pressure within the external chamber is greater than a pressure within the bellows receptacle.

The container of the first technique may further comprise an inlet connection between the inlet valve and the bellows receptacle; and an outlet connection between the outlet valve and the bellows receptacle; wherein changing a size of the inlet connection and the outlet connection changes an internal volume of the bellows receptacle.

The bellows receptacle of the container of the first technique may be configured to capture a sample of cryogenic liquid in liquid phase when in the compressed state, wherein the sample enters the bellows receptacle through the inlet valve.

A temperature of the bellows receptacle of the container of the first technique may be the same as a temperature of the sample of cryogenic liquid when the sample of cryogenic liquid is captured in the bellows receptacle.

The bellows receptacle of the container of the first technique may be configured to prevent the sample of cryogenic liquid from leaking out of the bellows receptacle.

The bellows receptacle of the container of the first technique may be configured to expand to an expanded state within the pressurised external chamber when the captured sample of cryogenic liquid vaporises and transitions from the liquid phase to a gas phase within the bellows receptacle, and wherein the pressure within the bellows receptacle and the pressure within the external chamber both increase when the sample vaporises.

The bellows receptacle of the container of the first technique may be configured to expand to a fully expanded state when all of the sample of cryogenic liquid has vaporised.

The external chamber of the container of the first technique may be configured so that the increased pressure within the external chamber counterbalances the increased pressure within the bellows receptacle when the sample vaporises.

The bellows receptacle of the container of the first technique may be further configured to store the sample in the gas phase in the expanded state.

The bellows receptacle of the container of the first technique may be configured to capture the sample of the cryogenic liquid in the liquid phase when the sample of the cryogenic liquid has a temperature between -90 °C and -260 °C.

The pressure within the bellows receptacle of the container of the first technique, when the bellows receptacle is in the compressed state, may be the same as a process pipeline pressure during the capture of the sample of the cryogenic liquid.

According to a second technique, the container of the first technique may further comprise: a first pressure transmitter configured to measure the pressure within the bellows receptacle.

The container of the second technique may further comprise: a second pressure transmitter configured to measure the pressure within the external chamber.

The bellows receptacle of the container of the second technique may be configured to accumulate grab samples of gas, wherein the grab samples of gas are captured by a pump or compressor and enter the bellows receptacle from the pump or compressor through the inlet valve.

The bellows receptacle of the container of the second technique may be configured to expand to an expanded state within the pressurised external chamber when the grab samples of gas accumulate in the bellows receptacle, and wherein the pressure within the bellows receptacle and the pressure within the external chamber both increase when the grab samples of gas accumulate.

The external chamber of the container of the second technique may be configured so that the increased pressure within the external chamber counterbalances the increased pressure within the bellows receptacle when the grab samples of gas is accumulate.

The bellows receptacle of the container of the second technique may be further configured to store the sample of gas within the bellows receptacle.

The pressure measured in bellows receptacle of the container of the second technique by the first pressure transmitter during sampling may indicate the amount of gas (mol) accumulated in the bellows receptacle.

The pressure within the bellows receptacle of the container of the second technique when the bellows receptacle is in the compressed locked state may be atmospheric pressure.

The bellows receptacle of the container of the first and second techniques may comprise a plurality of stainless steel diaphragm rings welded together in pairs and silicon coated for neutrality to contaminants.

According to a third technique, there is provided a thermally vacuum insulated enclosure. The thermally vacuum insulated enclosure comprising: the container of the first technique; a flow indicator for determining a liquid phase of the sample; a viscosity detector for determining a viscosity of the sample; and a vacuum pump configured to create a vacuum within the vacuum enclosure, wherein the container is removable from the enclosure.

According to a fourth technique, there is provided a method of capturing a sample of cryogenic liquid in a variable volume and variable pressure sampling container. The method comprises: inserting a variable volume and variable pressure sampling container into a thermally insulated vacuum enclosure, the container comprising a bellows receptacle comprising an inlet valve and an outlet valve, and a pressurised external chamber surrounding the bellows receptacle, wherein the pressurised external chamber is configured to maintain the bellows receptacle in a compressed state during capture of a sample of cryogenic liquid, and connecting the inlet valve of the container to a process pipeline containing cryogenic liquid and the outlet valve of the container to vent or boil-off-gas; opening the inlet valve and the outlet valve of the container; cooling the bellows receptacle of the container from a first temperature to a second temperature, wherein the second temperature is a temperature of the cryogenic liquid in the process pipeline, by flowing the cryogenic liquid from the process pipeline into the bellows receptacle through the inlet valve and out of the bellows receptacle through the outlet valve; determining that the cryogenic liquid flowing out of the outlet valve is in a liquid phase; and closing the inlet valve and the outlet valve to capture a sample of cryogenic liquid in the bellows receptacle of the container.

The method of the fourth technique, further comprising: gradually breaking the vacuum in the enclosure to gradually increase the temperature of the captured sample and the temperature of the bellows receptacle from the second temperature to an ambient temperature, wherein the ambient temperature is greater than a boiling point temperature of the cryogenic liquid.

The method of the fourth technique, wherein as the temperature of the bellows receptacle exceeds the boiling point temperature of the cryogenic liquid, the method further comprises: vaporizing the captured sample within the bellows receptacle, such that the captured sample transitions from the liquid phase to a gas phase within the bellows receptacle, causing the bellows receptacle to expand.

The method of the fourth technique, wherein vaporization of the captured sample within the bellows receptacle increases a pressure within the bellows receptacle and increases a pressure within the external chamber, the method further comprising: counterbalancing the increased pressure within the bellows receptacle with the increased pressure within the external chamber.

The method of the fourth technique, further comprising: removing the container from the enclosure when the temperature of the captured sample and the temperature of the bellows receptacle has increased to the ambient temperature.

The method of the fourth technique, further comprising: storing the captured sample in the gas phase within the bellows receptacle of the container.

The method of the fourth technique, wherein the inlet valve is connected to the process pipeline though a vacuum insulated take-off probe.

The method of the fourth technique, wherein the vent or boil-off-gas is at or near atmospheric pressure.

The method of the fourth technique, wherein the ambient temperature comprises room temperature.

Embodiments will now be described with reference to the accompanying figures of which:

Figure 1 illustrates schematically a variable volume and variable pressure sampling container having a compressed bellows receptacle;

Figure 2 illustrates schematically a profile of the bellows receptacle in the compressed state;

Figure 3 illustrates schematically the variable volume and variable pressure sampling container of Figure 1 having an expanded bellows receptacle;

Figure 4 illustrates schematically a sampling take-off system that uses a vacuum insulated extraction probe for sampling cryogenic liquid;

Figure 5 illustrates schematically a vacuum insulated extraction probe for sampling cryogenic liquid;

Figures 6A to 6C illustrate schematically the container 1 during sampling of cryogenic liquid;

Figure 7 illustrates schematically a sampling take-off system that uses a pitot inlet and outlet bypass loop for sampling cryogenic liquid;

Figure 8 illustrates schematically a Gross heating value (BTU/lb) and contaminants ($Hg/S/H_2O$) measurement chain;

Figure 9 illustrates schematically a grab pump filling a variable volume and variable pressure container 1 for sampling natural gas;

Figure 10 illustrates the non-fundamental measurement of natural gas sample volume accumulated under constant pressure conditions in a piston cylinder compared with the SI fundamental symbol n (n= amount of substance (mol)) accumulated in a variable volume and variable pressure sampling container 1;

Figure 11 illustrates schematically a method of capturing a sample of cryogenic liquid in liquid phase and storing the sample in gas phase; and

Figure 12 illustrates schematically strategic sample take-off steps in custody transfer.

A variable volume and variable pressure sampling container for capturing and storing a sample of cryogenic liquid or for accumulating and storing a sample of natural gas is provided. The sampling container comprises a bellows receptacle provided within a pressurised external chamber. The pressure within the external chamber is greater than the pressure within the bellows receptacle, prior to sampling, to maintain the bellows receptacle in a compressed "locked" state.

According to a first embodiment, prior to capturing a sample of cryogenic liquid, direct from a process line, the bellows receptacle is rinsed with the cryogenic liquid and the temperature of the container is reduced to that of the cryogenic liquid. A sample of the cryogenic liquid, in its original liquid phase, is then captured and held inside the bellows receptacle. The temperature of the container and thus the captured cryogenic liquid is gradually increased to room or atmospheric temperature resulting in the cryogenic liquid vaporising and transitioning to its gas phase. As the cryogenic liquid vaporises, the pressure within the bellows receptacle increases resulting in the bellows receptacle expanding. In addition, the pressure within the external chamber increases, since expansion of the bellows receptacle within the external chamber increases the pressure within the external chamber, such that the pressure within the external chamber counterbalances the pressure within the bellows receptacle. The sample, in its gas phase, may then be stored and/or transported in the container. Since the sample is captured within the container in its original liquid phase and then stored and/or transported in the container in its gas phase, the integrity of the sample is not compromised.

According to a second embodiment, a grab pump calibrates and discharges natural gas samples into the bellows receptacle. As the grabbed samples of natural gas are accumulated in the bellows receptacle, the internal pressure increases resulting in the bellows receptacle expanding. In addition, the pressure within the external chamber increases, since expansion of the bellows receptacle within the external chamber increases the pressure within the external chamber, such that the pressure within the external chamber counterbalances the pressure within the bellows receptacle. The sample of natural gas may then be stored and/or transported in the container. The integrity of the sample is not compromised and has a virtually limitless lifespan.

Reference will now be made in detail to the embodiments, examples of which are illustrated in the accompanying figures. In the following detailed description numerous specific details are set forth by way of examples in order to provide a thorough understanding of the relevant teachings. However, it will be apparent to one of ordinary skill in the art that the present teachings may be practiced without these specific details.

For the avoidance of doubt, all references herein to cryogenic liquid refer to any liquid having a boiling point below -90 °C (-130 °F).

Referring to Figure 1, a variable volume and variable pressure sampling container 1 for capturing cryogenic liquids or accumulating natural gas grabs is illustrated. The variable volume and variable pressure sampling container 1 comprises a bellows receptacle 3 encapsulated within an external chamber 2. The bellows receptacle 3 is fixed at a first end $3_1$ to the external chamber 2. A second end $3_2$ of the bellows receptacle 3, opposite to the first end $3_1$, is movable within the external chamber 2, such that when expanding within the external chamber 2, the second end $3_2$ of the bellows receptacle 3 moves away from the first end $3_1$ of the bellows receptacle 3. An inlet valve 4 is provided in the container 1 to enable the sample to enter the bellows receptacle 3 (via the inlet valve 4). The container 1 also comprises an outlet valve 5. The outlet valve 5 is provided in the container 1 to enable the liquid sample to exit the bellows receptacle 3 (via the outlet valve 5). When the container 1 is used to accumulate a gas sample, the outlet valve 5 is a direct flushing valve to boil off gas (BOG), so that the bellows receptacle 3 can be cleaned at start up. The inlet and outlet valves 4, 5 may be provided in the first end $3_1$ of the bellows receptacle 3. The inlet and outlet valves 4, 5 are leak free valves having helium leak rate of better than $1 \times 10^{-9}$ atm cc/sec.

The bellows receptacle 3 may be manufactured from stainless steel. In addition, or alternatively, the bellows receptacle 3 may consist of a plurality of diaphragm rings welded together in pairs for high expansion compensation. The bellows receptacle 3 has an axial stretching stroke of at least 86% of the total length of the bellows receptacle 3. Figure 2 illustrates the bellows receptacle 3 in a compressed state.

Figure 1 illustrates the container 1 with the bellows receptacle 3 in a compressed "locked" state. The external chamber 2 is a pressurised external chamber 2. The external chamber 2 is maintained at a pressure $P_{ec1}$ greater than the pressure $P_c$ within the internal cavity of the bellows receptacle 3 in order to maintain the bellows receptacle 3 in the compressed state prior to sampling. The bellows receptacle 3 is sealed with absolute tightness such that the sample within the bellows receptacle 3 cannot leak into the external chamber 2. The internal cavity of the external chamber 2 may be pressurised using instrument air.

When the bellows receptacle 3 is in the fully compressed "locked" state, the bellows receptacle 3 has an external diameter $d_{br}$, an external compressed length $l_c$, an external volume $v_{ce}$, an internal volume $v_{ci}$ and an internal pressure $P_c$, whilst the external chamber 2 has an internal diameter $d_{ec}$, an internal length $l_{ec}$, an internal volume $v_{ec1}$ (which is the total internal volume $V$ within the external chamber 2 minus the external volume $v_{ce}$ of bellows receptacle 3 in the compressed state) and an internal pressure $P_{ec1}$.

The internal volume $v_{ci}$ of the bellows receptacle 3 in the fully compressed "locked" state is the sum of the dead volume within the compressed bellows, the internal volume of inlet and outlet connections to the respective inlet/outlet valves and the bellows receptacle, and the dead volume of the inlet and outlet valves 4, 5. By changing the size of the connections, the internal volume $v_{ci}$ can be adjusted so that the pressure $P_{ec1}$ within the external chamber 2 is consistent when different cryogenic liquids, or gases are sampled.

The diameter $d_{br}$ of the bellows receptacle 3 does not change during use of the variable volume and variable pressure sampling container 1. However, the external length, external volume, internal volume and internal pressure of the bellows receptacle 3 can change during use of the variable volume and variable pressure sampling container 1. In addition, the internal diameter $d_{ec}$ and internal length $l_{ec}$ of the external chamber 2 does not change during use of the variable volume and variable pressure container 1. However, the internal volume and internal pressure of the external chamber 2 can change during use of the variable volume and variable pressure container 1.

Figure 3 illustrates the container 1 comprising an expanded, decompressed, bellows receptacle 3. When the bellows receptacle 3 is expanded, the bellows receptacle 3 has an unchanged external diameter $d_{br}$, an expanded external length $l_d$, an expanded external volume $v_{de}$, an expanded internal volume $v_{di}$ and an expanded internal pressure $P_d$, whilst the external chamber 2 has an unchanged diameter $d_{ec}$, an unchanged length $l_{ec}$, an internal volume $v_{ec2}$ (which is the total volume $V$ within the external chamber 2 minus the external volume $v_{de}$ of bellows receptacle 3 in the expanded state) and an internal pressure $P_{ec2}$.

The (expanded) pressure $P_{ec2}$ multiplied by the (expanded) volume $v_{ec2}$ ($v_{ec2} = V - v_{de}$) is equal to the (compressed) pressure $P_{ec1}$ multiplied by the (compressed) volume $v_{ec1}$ ($v_{ec1} = V - v_{ce}$) as represented by equation 1 below (pressure being measured in barA).

$$P_{ec2} \times (V - v_{de}) = P_{ec1} \times (V - v_{ce}) \qquad\qquad \text{Equation 1.}$$

Equation 1 can be rewritten as:

$$V = (P_{ec1} \times v_{ce} - P_{ec2} \times v_{de}) / (P_{ec1} - P_{ec2}) \qquad\qquad \text{Equation 2.}$$

According to a first embodiment, the container 1 is for capturing a sample of cryogenic liquid. In the first embodiment, the bellows receptacle 3 expands when a sample of cryogenic liquid within the bellows receptacle vaporises and transitions from liquid phase to gas phase. As the bellows receptacle 3 expands, the external volume of the bellows receptacle 3, the internal volume of the bellows receptacle 3 and the internal pressure within the bellows receptacle 3 increases. In addition, the volume within the external chamber 2 decreases, by virtue of the bellows receptacle 3 taking up more space within the external chamber 2. Additionally, as the volume within the external chamber 2 decreases, the pressure within the external chamber 2 increases in inverse proportion. The increased pressure $P_{ec2}$ within the external chamber 2 when the bellows receptacle 3 is expanded provides a counter pressure to the increased internal pressure $P_d$ within the bellows receptacle 3 when the bellows receptacle 3 is expanded.

The dimensions of the external chamber 2 and the dimensions of the bellows receptacle 3 are determined based on the liquid/gas volume expansion coefficient of the cryogenic liquid which will be sampled in the container 1, and the amount of cryogenic liquid to be held in the bellows receptacle 3, such that when fully expanded (when the temperature of the container is at ambient temperature and all of the cryogenic liquid has transitioned to gas phase) and/or when the desired amount of cryogenic liquid has been sampled, the pressure within the bellows receptacle 3 is counter balanced by the pressure within the external chamber 2.

According to one example of the first embodiment, the cryogenic liquid to be sampled in the container 1 is LNG which has a liquid/gas volume expansion coefficient of 1/600. The bellows receptacle 3 has an external diameter $d_{br}$ of 317 mm. In addition, the bellows receptacle 3 has an external length $l_c$ of 1.2 mm when in the fully compressed "locked" state and an external volume $v_{ce}$ of 74 cm$^3$ when in the fully compressed "locked" state. The intrinsic internal dead volume of the bellows receptacle 3 when in the fully compressed "locked" state is 3 cm$^3$. When the cryogenic liquid to be sampled is LNG, the additional dead volume brought by the inlet/outlet valves 4, 5 and the inlet/outlet connections is arranged to set an internal volume $v_{ci}$ of the bellows receptacle 3 in the fully compressed "locked" state of 8 cm$^3$, thus the bellows receptacle 3 is capable of trapping 8 cm$^3$ of LNG.

The external chamber 2 has an internal diameter $d_{ec}$ of 323.90 mm and an internal length $l_{ec}$ of 24.733 mm. Thus, the total volume $V$ within the external chamber 2 is 2037 cm$^3$. The pressure $P_{ec1}$ within the external chamber 2 is 6 barg (7 barA) to maintain the bellows receptacle 3 in the fully compressed "locked" state and the pressure $P_c$ within the bellows receptacle 3 when in the fully compressed "locked" state is atmosphere (1 barA) or BOG, since the outlet valve 5 is open during compression of bellows. The internal volume $v_{ec1}$ within the external chamber 2, when the bellows receptacle 3 is in the compressed state is the total internal volume $V$ within the external chamber (i.e., 2037 cm$^3$) minus the external volume $v_{ce}$ of bellows receptacle 3 in the compressed state (i.e., 74 cm$^3$). The internal volume $v_{ec1}$ = 1963 cm$^3$.

The pressure $P_{ec1}$ within the external chamber 2 maintains the bellows receptacle 3 in the fully compressed "locked" state whilst the cryogenic liquid is being captured. For example, the pressure $P_c$ within the internal cavity of the bellows receptacle 3 may increase during sampling to the process pressure of the cryogenic liquid of 5 barg (i.e., the pressure of the process pipeline). However, the pressure $P_{ec1}$ within the external chamber 2 is at a pressure greater than the process pressure to maintain the bellows receptacle 3 in the fully compressed "locked" state during capture of the sample.

When in an expanded state, the external diameter $d_{br}$ of the bellows receptacle 3 is unchanged at 317 mm. In addition, the bellows receptacle 3 has an external length $l_{de}$ of 8.5 mm and an external volume $v_{de}$ of 527 cm$^3$.

Using equation 1, it is possible to determine the pressure $P_{ec2}$ within the external chamber 2 when the bellows receptacle is in the expanded state.

$$P_{ec2} \times (2037 - 527) = 7 \times (2037 - 74)$$

$$P_{ec2} = 9.1 \text{ barA.}$$

As stated above, when the cryogenic liquid has transitioned to its gas phase in the bellows receptacle 3, the pressure within the bellows receptacle 3 increases and the pressure within the external chamber 2 also increases. The increased pressure within the bellows receptacle 3 is counter balanced by the increased pressure $P_{ec2}$ within the external chamber 2.

The pressure $P_d$ (barA) within the bellows receptacle 3 when the cryogenic liquid has vaporised can be calculated using equation 3 below and is dependent on the liquid/gas volume expansion coefficient $lg_\varsigma$ of the cryogenic liquid, the amount $l_s$ of cryogenic liquid sampled (in litres) and the external volume $v_{de}$ of the bellows receptacle 3 when expanded (in litres). As stated above, the internal volume $v_{ci}$ of the bellows receptacle 3 in the fully compressed "locked" state is 8 cm$^3$, thus the bellows receptacle 3 is capable of capturing 8 cm$^3$ (0.008 litres) of LNG.

$$(l_s \times lg_\varsigma) \times v_{de} = P_d \qquad\qquad \text{Equation 3.}$$

Applying equation 3 to the LNG example, (0.008 x 600)/0.527 = 9.1 barA = 8.1 barg. The pressure $P_d$ (barA) within the bellows receptacle 3 when the cryogenic liquid has vaporised is equal to the pressure $P_{ec2}$ within the external chamber 2 when the cryogenic liquid has vaporised, since the volume within the external chamber 2 has reduced by 453 cm$^3$. The decrease in volume within the external chamber 2, as a result of the bellows receptacle 3 expanding, increases the pressure $P_{ec2}$ within the external chamber 2, counterbalancing the increased pressure $p_d$ within the bellows receptacle 3.

According to another example, the cryogenic liquid to be sampled in the container 1 is liquefied Hydrogen at temperature of -253 °C which has a liquid/gas volume expansion coefficient of 1/800. The dimensions of the bellows receptacle 3 and external chamber 2 are the same as those for the LNG example. However, the internal volume $v_{ci}$ of the bellows receptacle 3 is mechanically modified, by changing the size of the inlet/outlet connections, so that the bellows receptacle 3 is capable of trapping 6 cm$^3$ of liquefied Hydrogen. When a 6 cm$^3$ sample of liquefied Hydrogen is captured in the bellows receptacle 3 and vaporised, the bellows receptacle 3 expands.

Applying equation 3 to the liquefied Hydrogen example,

$$(0.006 \times 800)/0.527 = 9.1 \text{ barA} = 8.1 \text{ barg.}$$

The pressure $P_{ec2}$ within the external chamber 2 has increased to 8.1 barg.

The dimensions of the external chamber 2 and the dimensions of the bellows receptacle 3 in the compressed and expanded states and the initial pressure within the external chamber 2 and the initial pressure within the bellows receptacle 3 are determined so that a predetermined amount of cryogenic liquid may be captured in the bellows receptacle 3 and so that the pressure $P_{ec2}$ within the external chamber 2 counterbalances the increased pressure in the bellows receptacle 3 when the predetermined amount of cryogenic liquid is captured in the bellows receptacle 3.

An approximate indication of the amount of bellows expansion may be obtained using magnets. For example, a first pole magnet ring may be provided at the movable, second end $3_2$ of the bellows receptacle 3 and a second magnet may be provided in the external chamber 2, the first and second magnets having opposite poles.

As mentioned above, the container 1 is for capturing a sample of cryogenic liquid in its original liquid phase and holding the sample in the container 1. As is well known, a cryogenic liquid has a boiling point below -90 °C (-130 °F). Consequently, in order to avoid fractionation (partial vaporization) of the sample, the container 1 is cooled to a temperature which maximises the cryogenic liquid sub cooling before encapsulating a sample of the cryogenic liquid in the bellow receptacle 3. Thus, the container 1 is cooled to a temperature of the cryogenic liquid to be sampled, in a range between -90 °C to -260 °C depending on the cryogenic liquid to be sampled.

Following capture of a sample of cryogenic liquid, the container 1 is removed to a laboratory, either on or off site. Unlike the previously described LNG spot sampling device disclosed in "GIIGNL HANDBOOK", gas samples are not withdrawn from the bellows receptacle 3, instead the container 1 may be transported to a laboratory and/or provided to contracting parties. The sample is captured in the container 1 in its original liquid phase, such that the integrity of the sample is not compromised. The apparatus described herein does not require gas samples to be withdrawn on site, since the container itself may be transported. This results in a virtually limitless lifespan for the sample collected and ensures the integrity of the sample.

The herein described container 1 has particular application in the following fields:

- The liquefied natural gas (LNG) industry, for spot sampling and storage of liquefied natural gas (LNG) in the original liquid phase.
- The back-up and quality certification of the Gross heating value (called BTU/Ib Prover) and contaminants (Hg/S/H$_2$O) measurement chain.
- The Hydrogen liquefaction industry, for sampling and storage of liquid Hydrogen in the original liquid phase, and for liquefied Hydrogen quality analysis and contaminant measurements.

A sample of cryogenic liquid is captured in the container 1 and vaporised. The samples composition may then be analysed for measurements of the Gross heating value (BTU/Ib - British thermal unit) and parts per billion (ppb) traces of contaminants, such as Sulphur/Mercury/water measurements of the sample taken. It is well known that BTU/Ib is a common unit of measurement of the energy or heat content of a fuel and BTU/Ib measurements can be used to compare energy sources or fuels on an equal basis.

When the (ppb) traces of contaminants are required to be analysed, the entire internal surface of the bellows receptacle 3 may be kept inert with a silicon coating (such as Sulfinert®) for neutrality to contaminants such as organic Sulphur or Mercury.

Two different exemplary sampling take-off systems that may be used with the container 1 when sampling cryogenic liquid, are described below, the sampling take off systems are for use with process pipelines. However other sampling take-of systems may be used with the container 1.

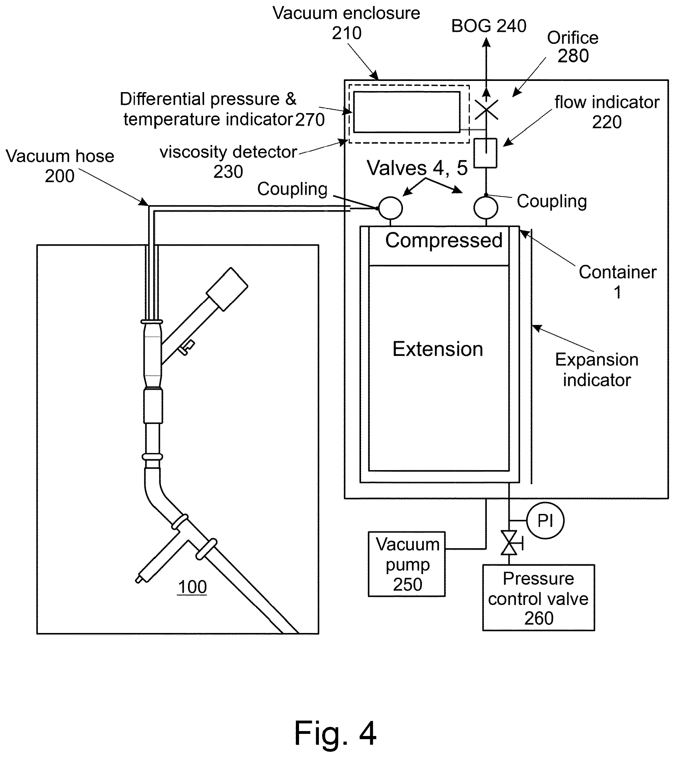

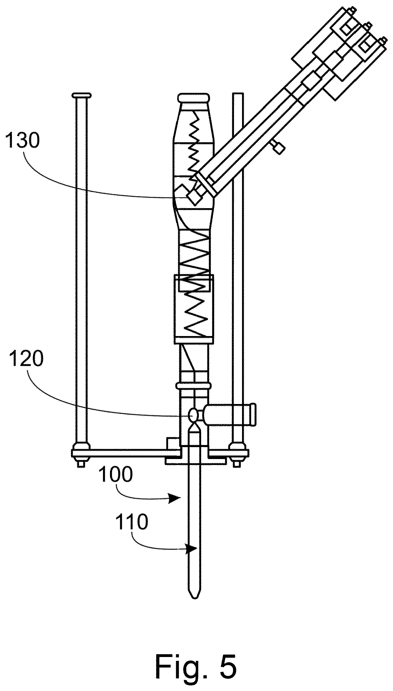

Figure 4 illustrates a sampling take-off system that uses a vacuum insulated extraction probe. The extraction probe is a LNG sampling vacuum probe as described in WO 2012/080619 A1 which is used for LNG liquid phase extraction from a process line. Figure 5 illustrates the extraction probe of WO 2012/080619 A1. The extraction probe comprises a sampling probe 100 having a capillary 110, a cryogenic insulation valve 120 and an automatic shut-off valve 130.

As illustrated in Figure 4, a container 1 as described herein is provided in a thermally insulated vacuum enclosure 210. The vacuum enclosure 210 is coupled to a vacuum pump 250 and a pressure control valve 260. The pressure control valve 260 may be used to set the pressure $P_{ec1}$ within the external chamber 2 to keep the bellows receptacle 3 in the compressed state. In addition, the vacuum enclosure 210 comprises a flow indicator 220 (such as a sight glass) and a viscosity detector 230 provided inside the vacuum enclosure 210. The viscosity detector 230 may comprise a differential pressure and temperature indicator 270 connected across the orifice 280. The sampling probe 100 and the vacuum enclosure 210 containing the flow indicator 230 and the viscosity detector 230 remain in permanent installation on the site. However, the container 1 comprising the inlet and outlet valves 4, 5 is removable from the enclosure 210, such that a sample may be removed and transported to a laboratory (either on or off site) in the container 1.

A container 1 is inserted into the enclosure 210, the inlet valve 4 of the container 1 is connected to the outlet of the probe 100 by a vacuum hose 200 and the outlet valve 5 of the container 1 is connected to the flow indicator 220, the viscosity detector 230 and BOG (Boil off gas) or vent 240. The BOG/vent 240 is at or near to atmospheric pressure. The enclosure 210 is then vacuumed by the pump 250 and the inlet and outlet valves 4, 5 of the container 1 are opened. When the valves 4, 5 of the container 1 are open, cryogenic liquid flows from the probe 100 into the container 1 via the inlet valve 4 and out of the container 1 via the outlet valves 5. The container 1 is cooled, and the compressed bellows receptacle 3 is rinsed by the circulation of the cryogenic liquid from the inlet valve 4 through the container 1 and out the outlet valve 5. The container 1 may be rinsed for cooling and/or decontamination prior to insertion into the enclosure 210.

When a sample of cryogenic liquid is to be collected, the inlet and outlet valves 4, 5 are opened, and the cryogenic liquid flows from the probe 100, through the compressed bellows receptacle 3 to BOG or vent 240. The cryogenic liquid flows through the bellows receptacle 3 at the pressure and process temperature of the process pipeline, and as it flows through the bellows receptacle 3, the cryogenic liquid cools and rinses the bellows receptacle 3. Following exit from the container 1 through the outlet valve 5, the cryogenic liquid flows through the flow indicator 220 and the viscosity detector 230. The flow indicator, such as a sight glass 220 is provided to enable an operator to visualize the liquid phase of the cryogenic liquid flowing out of the container 1. The viscosity detector 230 is used to measures the viscosity of the cryogenic liquid that flows out of the container 1 through the outlet valves 5. According to one embodiment, the viscosity of the sample is $1.2 \times 10^{-7}$ m²/s (0.12 centistokes (cSt)) in liquid phase and virtually zero in gas phase.

The pressure and temperature indicator 270 may also measure the pressure and temperature of the cryogenic liquid that flows from the outlet valve 5 to determine the viscosity of the cryogenic liquid that flows out of the container 1 through the outlet valve 5. Differential pressure is proportional to the viscosity and subjected to temperature, which is checked to be under the liquid cryogenic sub-cooling value.

When a continuous and free of bubbles liquid phase is visualized, via the sight glass 220, then it may be determined that the sample flowing out the outlet valve 5 is in the liquid phase without bubbling. In addition, when a stable viscosity measurement is obtained via the viscosity detector 230, and the temperature at the pressure and temperature indicator 270 is under the LNG sub-cooling value, then it may be determined that the sample flowing out the outlet valve 5 is in a stable liquid phase. When the sample flowing out the outlet valve 5 is in a stable liquid phase, the container 1 has been cooled sufficiently by the circulation of the cryogenic liquid.

When it is determined that the sample flowing out the outlet valve 5 is in a stable liquid phase, then the outlet and inlet valves 5, 4 are closed, trapping a volume of cryogenic liquid in the bellows receptacle 3 of the container 1. The appropriate container 1 is selected based on the desired size of sample, since the internal volume $v_{ci}$ of the bellows receptacle 3, in the compressed "locked" state, determines the volume of cryogenic liquid which can be trapped in the bellows receptacle 3. In addition, the appropriate container 1 is selected based on the liquid/gas volume expansion coefficient of the sample to be captured.

The container 1, comprising the external chamber 2, bellows receptacle 3, valves 4, 5 and captured sample of cryogenic liquid may then be removed from the vacuum enclosure 210. However, before the container 1 is removed from the vacuum enclosure 210, the container 1 (and the sample) increases in temperature towards ambient temperature. In order to eliminate the Leidenfrost phenomenon generated by the fact that the surface of the bellows receptacle 3 when at ambient temperature (for example at +40 °C) is significantly hotter than the cryogenic liquid boiling point temperature (for example at -160 °C), an operator gradually breaks the vacuum in the enclosure 210 before removing the container 1. By gradually breaking the vacuum in the enclosure 210, the reheating of the cryogenic liquid to ambient temperature is staggered resulting in homogeneous vaporisation of the cryogenic liquid and preventing the formation of macromolecules.

As the sample within the container 1 increases in temperature, the cryogenic liquid vaporises, converting from liquid phase to gas phase. As the sample converts from liquid phase to gas phase, the pressure within the bellows receptacle 3 increases, exceeding the pressure $P_{ec1}$ within the external chamber 2, so that the bellows receptacle 3 naturally expands within the external chamber 2 as illustrated in Figure 3. In addition, as the bellows receptacle 3 expands within the external chamber 2, the pressure within the external chamber 2 increases providing a balancing pressure to the bellows receptacle 3. The bellows receptacle 3 and the external chamber 2 are sized such that when the bellows receptacle 3 expands within the external chamber 2, the increased pressure within the external chamber 2 is counterbalanced by the increased pressure within the bellows receptacle 3. Both the pressure $P_{ec2}$ within the external chamber 2 and the pressure $P_d$ within the bellows receptacle 3 are equal when the bellows receptacle 3 is fully expanded within the external chamber 2 and/or when the desired amount of cryogenic liquid has been sampled and has vaporised within the bellows receptacle 3.

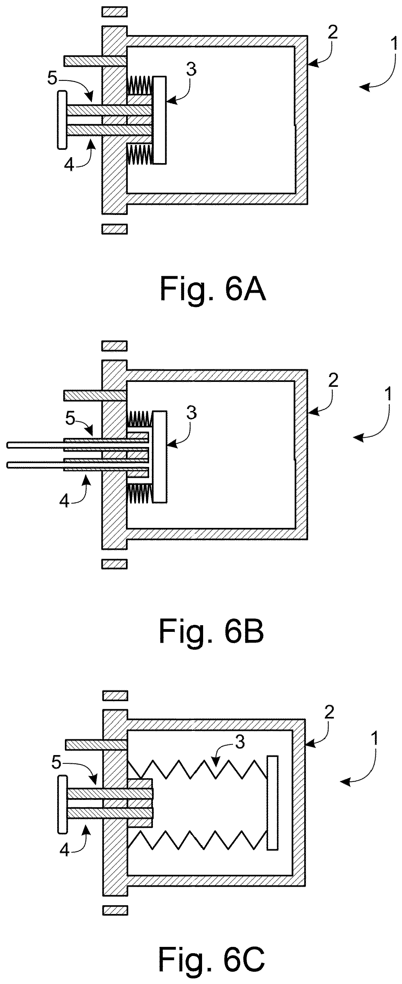

Figure 6A illustrates the container 1 before sampling. The external pressure on the bellows receptacle 3/the internal pressure $P_{ec1}$ within the external chamber 2, which maintains the bellows receptacle 3 in the compressed state, is greater than the internal pressure $P_c$ inside the bellows receptacle 3.

Figure 6B illustrates the container 1 during cooling and rinsing of the bellows receptacle 3, when the inlet and outlet valves 4, 5 are open and the cryogenic liquid flows through the compressed bellows receptacle 3. The internal pressure $P_c$ inside the bellows receptacle 3 increases to the pressure of the cryogenic liquid in the process line, whilst the external pressure on the bellows receptacle 3/the internal pressure $P_{ec1}$ of the external chamber 2 is unaltered at the pre-set pressure. The external pressure on the bellows receptacle 3/the internal pressure $P_{ec1}$ of the external chamber 2 is set to be greater than the pressure in the process line and thus the pressure $P_c$ within the bellows receptacle 3, when the cryogenic liquid flows through the bellows receptacle 3, to retain the bellows receptacle 3 in the compressed state, when it is capturing a sample of cryogenic liquid.

When a continuous liquid phase of the cryogenic liquid is detected at the outlet of the outlet valve 5, the inlet and outlet valves 4, 5 are closed, trapping a sample of cryogenic liquid in the bellows receptacle 3. The vacuum in the enclosure 210 is gradually broken, increasing the temperature of the bellows receptacle 3 and the temperature of the sample of cryogenic liquid to ambient temperature. As the temperature of the bellows receptacle 3 exceeds the cryogenic liquid boiling point and increases to ambient temperature, the cryogenic liquid within the bellows receptacle 3 vaporizes, causing the bellows receptacle 3 to expand. The container 1 may then be removed from the vacuum enclosure 210.

Figure 6C illustrates the container 1 after vaporization. As the cryogenic liquid vaporizes, the bellows receptacle 3 expands such that the internal volume $v_{di}$ and the external volume $v_{de}$ of the bellows receptacle 3 increases. In addition, the pressure within the bellows receptacle 3 increases to $P_d$. Conversely, as the bellows receptacle 3 expands, the volume within the external chamber 2 decreases to $v_{ec2}$, whilst the pressure within the external chamber 2 increases to $P_{ec2}$, in inverse proportion. When vaporization has completed, such that all of the cryogenic liquid has vaporized and transitioned from liquid phase to gas phase, the bellows receptacle 3 is expanded and the container is at ambient temperature. When expanded, the increase in the internal pressure within the bellows receptacle 3 is balanced by a pressure increase inside the external chamber 2 on the bellows receptacle 3, such that the pressure $P_d$ inside the bellows receptacle 3 is equal to the pressure $P_{ec2}$ inside the external chamber 2.

Following removal of the container 1, it is labelled for definition of the sample and the date of filling. The sample may then be stored in the container 1 and/or transported to another location either on or off site for testing.

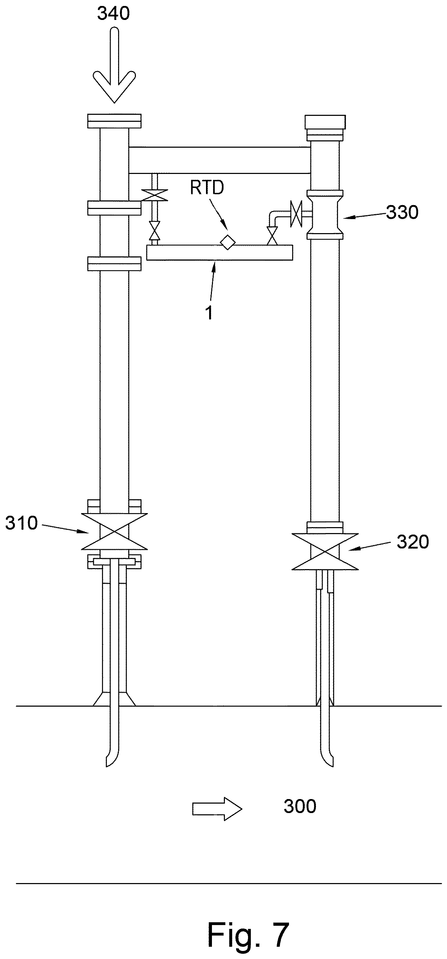

Figure 7 illustrates another sampling take-off system that may be used with the container 1 described herein. Figure 7 illustrates a pitot inlet and outlet bypass loop. As illustrated in Figure 7, a pitot entry device 310 and pitot exit device 320 is provided in the process pipeline 300. The pitot entry device 310 and pitot exit device 320 create a fast flow-rate loop of cryogenic liquid bypassing the container 1. This arrangement is also called an "impact tube" and is designed to generate in the by-pass loop a fluid velocity approximately 1/3 of the fluid velocity in the process pipeline 300 in order to ensure sufficient flow for circulation in a sub-cooling state. A venturi constricted section 330 is connected between the outlet of the container 1 and the impact tube returning length. The constricted section 330 has a reduced internal diameter when compared to the internal diameter of the impact tube. For example, the impact tube may have an internal diameter of 4 inches (10.16 cm) whilst the constricted section 330 may have an internal diameter of 2 inches (5.08 cm). This arrangement ensures a continuous flow through the container 1 by suctioning at the outlet the liquefied sample phase. The sampling take-off system of Figure 7 also includes a probe/vaporizer outlet 340.

Consequently, samples may be taken at the probe outlet 340 whilst simultaneously been collected in the container 1. These samples may then be compared to analyze the composition at the outlet 340 and at the outlet of container 1.

Some benefits of the system of Figure 7 are: it guarantees that the sample is in the liquid phase along the length of the impact tube, once the flow circulation at subcooling temperature monitored by a temperature sensor, such as a PT 100 Resistance Temperature Detector (RTD), is established; all gas and liquids at the outlet of the container 1 are returned to the process line 300 without atmospheric or boil of gas effluents; and the sample take-off at the probe outlet 340 and at the container 1 are simultaneous making it easier to compare.

As with the sampling take-off system illustrated in Figure 4, the container 1 is provided in a thermally insulated vacuum enclosure 210 (not illustrated) when connected to the sampling take-off system of Figure 7. The pitot entry device 310 is connected to the container inlet valve 4 by a flow reducer tubing. The flow reducer tubing reduces the flow rate of the cryogenic liquid taken from the fast flow-rate by-pass loop. The outlet valve 5 of the container 1 is connected the constricted section 330. When the valves 4, 5 of the container 1 are open, cryogenic liquid flows at sufficient rate to keep the sample in liquid phase, from the process pipeline 300 fast flow-rate by-pass loop, into the container 1 via the inlet valve 4 and out of the container 1 via the outlet valve 5. The container 1 is thus cooled down by the circulation of the cryogenic liquid through the bellows receptacle 3. As with the sampling take-off system illustrated in Figure 4, the outlet valve 5 may be connected to a flow indicator, such as a sight glass (not illustrated), and a viscosity detector (not illustrated), such that the cryogenic liquid flows from the outlet valve 5 through the sight glass and viscosity detector (the viscosity detector may comprise an orifice and a differential pressure transmitter and temperature indicator as described above with reference to figure 4) to the constricted section 330.

As with the sampling take-off system of Figures 4 to 6, when a sample of cryogenic liquid is to be collected, both the inlet and outlet valves 4, 5 are opened. The cryogenic liquid flows from the process line 300, through the compressed bellows receptacle 3 to the constricted section 330 and back to the process line 300. When the sample flowing out the outlet valve 5 is in the liquid phase indicating that the container 1 has been cooled sufficiently by the circulation of the cryogenic liquid, the inlet and outlet valves 4, 5 are closed, trapping a sample of cryogenic liquid in the bellows receptacle 3.

The vacuum in the enclosure 210 is gradually broken, heating the temperature of the bellows receptacle 3 and the temperature of the sample of cryogenic liquid to ambient temperature. As the temperature of the bellows receptacle 3 increases to ambient temperature, the cryogenic liquid within the bellows receptacle 3 vaporizes, causing the bellows to expand, once the pressure within the bellows receptacle 3 exceeds the pressure $P_{ec1}$ within the external chamber 2. The container 1 may then be removed from the vacuum enclosure 210 connected to the pitot inlet and outlet bypass loop. Following removal of the container 1, it is labelled for definition of the sample and the date of filling.

According to another embodiment, Polyurethane foam, or any other thermal insulation, may be applied to the external wall of the external chamber 2 for thermal insulation, rather than the container 1 being provided in a vacuum enclosure 210. Once the container 1 is isolated with inlet and outlet valves shut-off, the warming phase to room temperature of container 1 begins. Since there is no vacuum being gradually broken in order to increase the temperature of the container 1, the increase in temperature of the thermally insulated container 1 takes much longer than the vacuum insulation enclosure 210. However, the cryogenic liquid still transitions from liquid to gas as the temperature of the container increases to ambient temperature.

As described above with reference to Figures 6A to 6C, as the sample within the container 1 increases in temperature to ambient temperature, the cryogenic liquid vaporises, converting from liquid phase to gas phase. As the sample converts from liquid phase to gas phase, the pressure within the bellows receptacle 3 increases and the bellows receptacle 3 naturally expands within the external chamber 2 as illustrated in Figure 3.

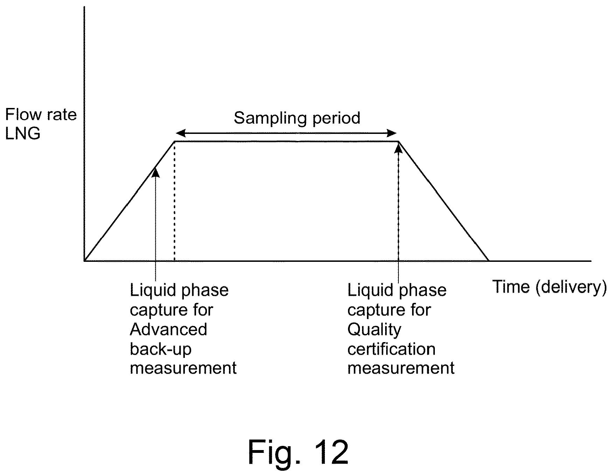

According to known custody transfer requisitions, spot samples may be captured in liquid phase at the key points of the transfer at different phases of the loading or unloading of the LNG carrier, for example at 25%, 50% and 75% of ship tank level. Alternatively, as illustrated in Figure 12, as liquid spot sampling is not affected by process pressure and flow variations, the sampling period can be extended through origin and end of transfer for a more complete measurement of the BTU/Ib and contaminants on complete transfer, to attain:

- before liquid/gas autosampling chain start-up: an advanced back-up measurement, which will be taken into consideration in the event of failure of ISO 8943 gas sampling.
- at the end of sampling period as a quality certification of the ISO 8943 liquid/gas autosampling chain measurements.

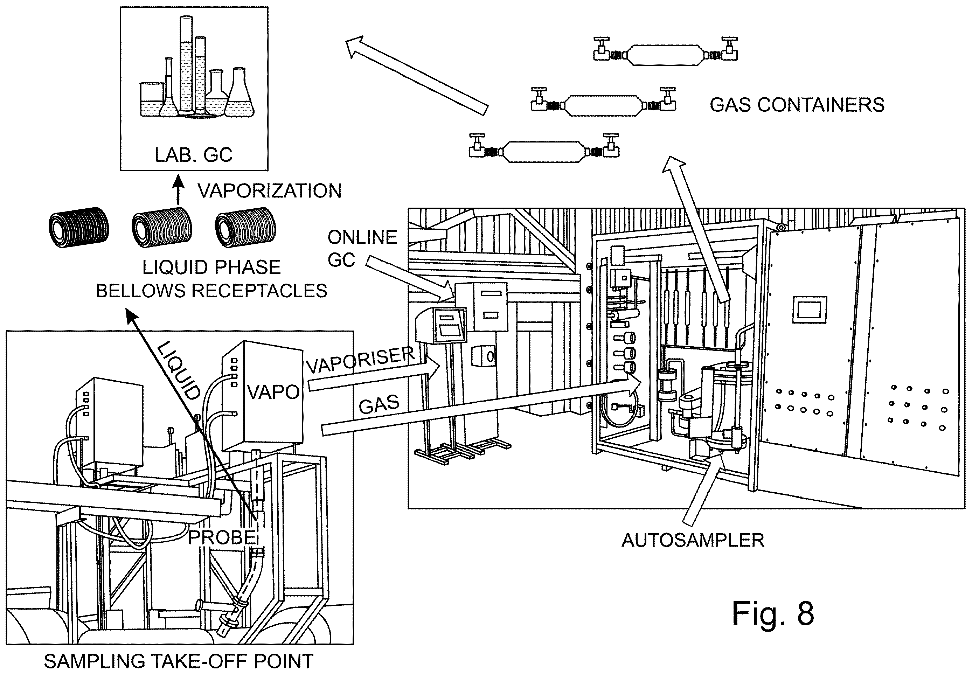

Figure 8 illustrates a BTU/Ib and contaminants measurement chain which integrates the above describe vacuum sampling probe of Figure 4, to pick-up a liquid sample in the container 1 described herein, with a known continuous or intermittent mode of autosampler according to the ISO 8943 standard, a known on-line gas chromatograph and a known laboratory chromatograph.

The sample captured in the original liquid phase in the container 1 directly feeds the injection valve of the laboratory chromatograph and the measurements taken from the "original" sample in the container 1 are compared at the most accurate uncertainty level to those of the ISO 8943 gas sampled cylinders at the end of the chain. The accuracy of the on-line chromatograph is also checked by comparison with the measurements taken from the "original" sample. This quality certification of the results obtained using the different methods and apparatus of Figure 8 removes any doubt regarding the integrity of the sample at the end of its transfer through the tubes, vaporizer, components and pump constituting the sampling. The original liquid phase sample captured in the container 1 serves as a reference in order to avoid mismeasurement and ensure that the accuracy remains at the most accurate uncertainty level. In addition, the "original" liquid phase sample captured in the container 1 may be used as a spot sample for proving accuracy of liquid in-situ analysers such as Raman or infrared types and/or for calibration of gas analysers.

As mentioned above, the container 1 described herein may be used in the Hydrogen liquefaction industry, for sampling and storage of liquid Hydrogen in the original liquid phase, and for liquefied Hydrogen quality analysis and contaminant measurements in situ. When Hydrogen (namely H2 Blue) is produced by steam methane reforming (SMR) with carbon capture, the carbon monoxide level and other sources of impurities such as water and oxygenate are required to be determined to comply with the hydrogen quality standard for fuel cells in road vehicles (ISO 14687-2).

A liquid phase sample may be captured in the container 1 at the key points of the transfer to validate the on-line impurities measurements and may be used as a calibration standard for analysis to monitor process performances.

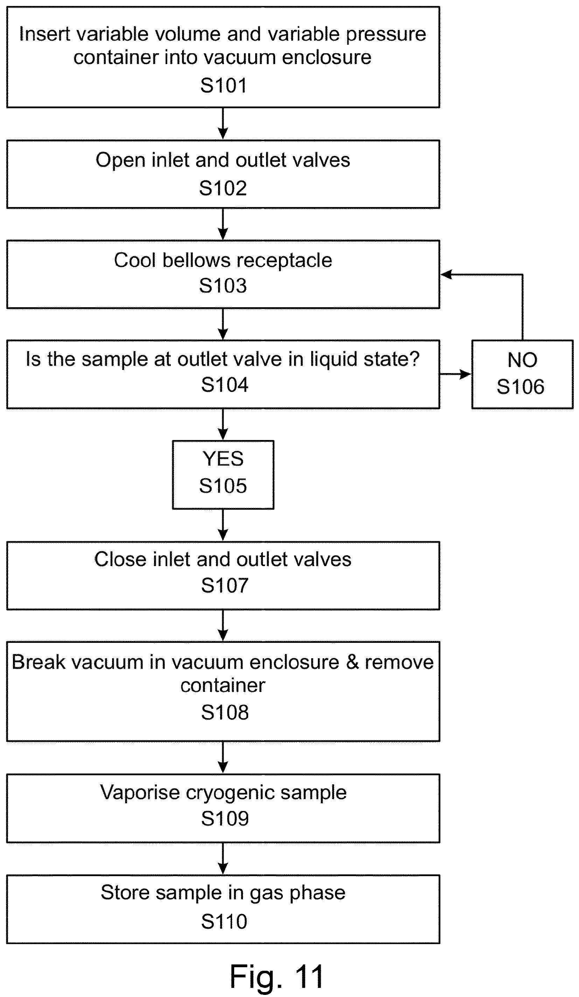

Figure 11 illustrates schematically, a method of capturing a sample of cryogenic liquid in a variable volume and variable pressure container. The method begins at step S101 by inserting the variable volume and variable pressure container 1 described herein into a vacuum enclosure. The bellows receptacle of the container 1 is held in a compressed "locked" state, by the pressure within the external chamber. The inlet valve and the outlet valve of the container are opened at step S102. The inlet valve being connected to a process pipeline containing cryogenic liquid via any of the sampling take-off systems described herein. The outlet valve is connected to boil-off-gas or vent. At step S103, cryogenic liquid flows from the process pipeline into the bellows receptacle through the inlet valve and out of the bellows receptacle through the outlet valve, cooling and rinsing the bellows receptacle. When it is determined, at steps 5014 and S105 that the sample flowing out of the outlet valve is in liquid phase, the inlet and outlet valves are closed at step S107 to capture a sample of the cryogenic liquid in the compressed bellows receptacle. The outlet valve may be closed first and then the inlet valve. However, when it is determined, at steps S104 and S106 that the sample flowing out of the outlet valve is not in liquid phase, then the inlet and outlet valves are not closed at step S107.

After a sample of cryogenic liquid has been captured in the compressed bellows receptacle, the vacuum in the vacuum enclosure is gradually broken at step S108, increasing the temperature of the bellows receptacle 3 and the temperature of the sample of cryogenic liquid to ambient temperature, so that the container may be removed from the vacuum enclosure. The increase in temperature results in the sample vaporising within the container, transitioning from liquid phase to gas phase at step S109. As the sample vaporises, the pressure within the bellows receptacle 3 increases and the bellows receptacle 3 expands to an expanded state. The pressure within the external chamber 2 also increases to counterbalance the pressure increase in the bellows receptacle 3.

The sample in gas phase is then stored within the expanded bellows receptacle 3 of the container 1 (step S110) such that the container 1 can be transported for testing without the integrity of the sample being compromised.

As mentioned above, the container 1 described herein may also be used for natural gas sampling and storage.

According to a second embodiment, the variable volume and variable pressure sampling container 1 may be integrated into a natural gas sampling system. In the second embodiment, the container 1 is the same as the container 1 of the first embodiment but also comprises two pressure transmitters PT1, PT2, for measuring the pressure in the bellows receptacle 3 (bellows receptacle pressure transmitter PT1) and the pressure in the external chamber 2 (external chamber pressure transmitter PT2). The pressure in the bellows receptacle 3 and the pressure in the external chamber 2 should be identical during the sampling period. Consequently, the external chamber pressure transmitter PT2 may only be provided to check that the pressure in the external chamber 2 is the same as the pressure in the bellows receptacle 3. In an alternative arrangement, the container 1 is the same as the container 1 of the first embodiment but also comprises a bellows receptacle pressure transmitter PT1 for measuring the pressure in the bellows receptacle 3 but not an external chamber pressure transmitter. In another alternative arrangement, the container 1 is the same as the container 1 of the first embodiment but also comprises an external chamber pressure transmitter PT2 for measuring the pressure in the external chamber 2 but not a bellows receptacle pressure transmitter for measuring the pressure in the bellows receptacle 3. The pressure measured in bellows receptacle 3 and/or the pressure measured in the external chamber 2 during sampling indicates the amount of gas (mol) accumulated in the bellows receptacle 3.

The ISO 10715 (1997) Natural gas sampling guidelines (general concept) and the ISO 8943 2017 entitled: Refrigerated light hydrocarbon fluids - Sampling of liquefied natural gas - Continuous and intermittent methods. Figure 3 of ISO 8943 2017 illustrates a pump or compressor generating sample grabs accumulated under constant pressure conditions in a (CP/FP) piston cylinder. The piston cylinder is counterbalanced by pressure from pre-charged helium in the opposite chamber. A pressure gauge in a manual system or a pressure transmitter in an automatic system measures the constant pressure of the helium, whilst a magnetic level gauge in the manual system or a magnetic level transmitter in the automatic system determines the position of the piston in the cylinder. This level gauge measurement is proportional to the sample grabs accumulated under constant pressure conditions in the piston cylinder chamber.

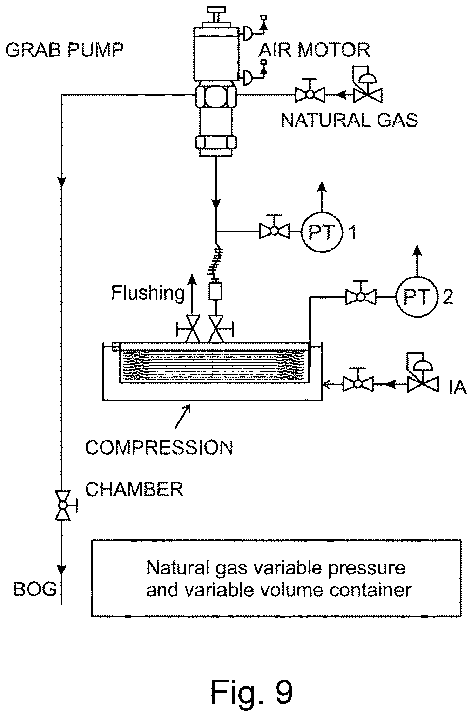

Figure 9 illustrates a similar arrangement to ISO 8943 2017, Figure 3, but rather than a piston cylinder, the container 1 of the second embodiment is used having a pressure transmitter PT1 for measuring the pressure in the bellows receptacle 3 and a pressure transmitter PT2 for measuring the pressure in the external chamber. The ISO 8943 2017 Figure 3 pump or compressor generates sample grabs of natural gas, which are accumulated in the bellows receptacle 3 of a container 1 as described herein. The bellows receptacle 3 expands when the grabbed samples of natural gas are discharged from the pump or compressor into the bellows receptacle 3. As with the first embodiment, when the bellows receptacle 3 expands, the internal volume and the internal pressure within the bellows receptacle 3 increases. In addition, the volume within the external chamber 2 decreases, by virtue of the bellows receptacle 3 taking up more space within the external chamber 2. Additionally, as the volume within the external chamber 2 decreases, the pressure within the external chamber 2 increases in inverse proportion. The increased pressure within the external chamber 2 when the bellows receptacle 3 is expanded provides a counter pressure to the increased internal pressure within the bellows receptacle 3.

As with the first embodiment, the pressure within the external chamber 2 is greater than the pressure within the bellows receptacle 3 in order to maintain the bellows receptacle 3 in a "locked" state prior to sampling. According to one example, the pressure within the external chamber 2 is at 0.1 barg, whilst the pressure within the bellows receptacle 3 is at atmospheric pressure. The bellows receptacle 3 is maintained in the "locked state" during a short manual flushing period before sampling. After this flushing period, the grab pump generates sample grabs of natural gas which accumulate in the bellows receptacle 3. Once the sample pressure within the bellows receptacle 3 exceeds the pressure within the external chamber 2 (i.e., 0.1 barg) both measurements PT1 and PT2 are the identical during the sampling period. In addition, both measurements PT1 and PT2 are proportional to the amount of substance (mol) accumulated in the bellows receptacle 3.

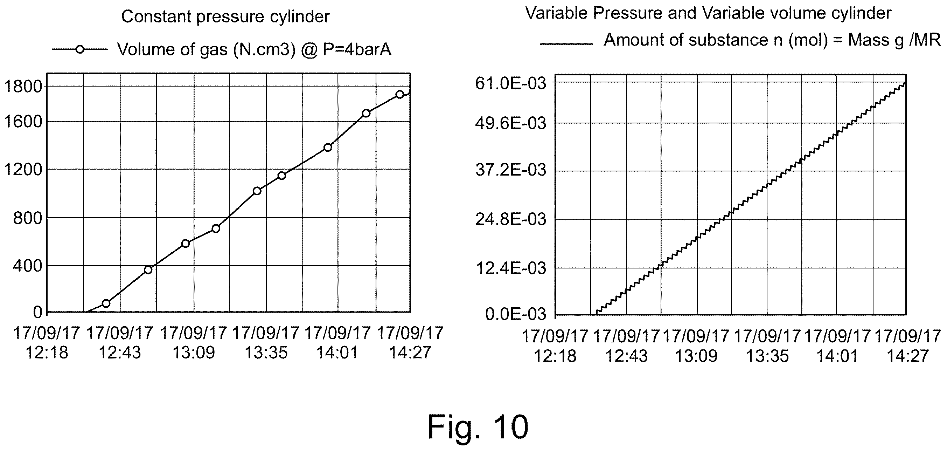

Figure 10 illustrates a constant pressure sample volume (cc) of natural gas accumulated in a CP/FP piston cylinder (the graph on the left) and monitored by magnetic level transmitters assembled from a pole disc and various magnets through incremental resolution compared with the amount of substance (mol) of natural gas accumulated in a container 1 of the second embodiment and measured by the pressure transmitter PT1 measuring the pressure within the bellows receptacle 3 (the graph on the right). The graph on the right shows a linear grabs accumulation curve of the amount of substance (mol) accumulated in the bellows receptacle 3 compared against the graph on the left which shows a jump line measurement of constant pressure sample volume (cc) accumulated in the CP/FP piston cylinder, each jump been considered as a plateau of the process pipeline flow proportional curve.

The container 1 of the second embodiment introduces to the natural gas sampling technology a new SI Basic unit measurement symbol "n" which is the amount of substance (mol) collected, rather than the collected constant pressure sample volume (cc) existing parameter proportional to the magnetic level transmitter. The amount of substance accumulated in the bellows receptacle 3 is a grabs accumulation linear curve naturally lengthening when the pressure increases. Therefore, the measurement of the amount of substance (mol) accumulated in the bellows receptacle 3 provides greater sensitivity and thus greater accuracy when compared with the constant pressure CP/FP piston cylinder sample volume (cc) measurement. This is because the CP/FP piston cylinder requires seals on the end cap and on the piston and grease on the moving parts, such that the CP/FP piston cylinder requires cleaning and leak testing after each use, and friction is produced in each stroke which all reduce the accuracy of the device. Additionally, the magnetic level transmitter assembled from a pole disc and various magnets through incremental resolution is another source of inaccuracy.

Referring again to Figure 10, the graph on the left indicates the volume of natural gas accumulated in a CP/FP piston cylinder by a grab pump at a constant pressure of 3 barg over time. This volume is monitored by the magnetic level gauge. Sampling stops when the CP/FP piston cylinder contains 1800 Normal cm$^3$ of natural gas at 3 barg. In contrast, according to the second embodiment, Figure 10, the graph on the right indicates that the same amount of natural gas (i.e., 1800 Normal cm$^3$) is grabbed by the grab pump for accumulation in the container 1. However, rather than being at a constant pressure of 3 barg, the container 1 is initially at atmospheric pressure, and the pressure within the container 1 increases with each grab up to a pressure of 3 barg. At 3 barg the container 1 holds the same volume of natural gas as the known CP/FP piston cylinder of 1800 Ncm$^3$.

The Amount of substance grabbed n (mol) may be calculated using equation 4, where M is the mass of the substance sampled in grams and MR is the molecular mass of the substance sampled in grams/mol.

$$n \ (mol) = M \ / \ MR \qquad\qquad \text{Equation 4.}$$

Natural gas mass M = 116 g for 1.8 Ndm$^3$
Natural gas molecular mass MR = 19 g/mol

$$n \ mol = 116 \ /19 = 61 * 10^{-3}$$

This n mol value collected at varying time interval of grabs correlates the flow proportional amount of substance transferred in process line within the non-moving part and accuracy of pressure transmitter of 0.05% of range.

The container 1 described herein is advantageous when compared to the known CP/FP piston cylinder since it has absolute tightness and virtually limitless lifespan.

As with the first embodiment, equations 1 and 2 apply to the second embodiment where a natural gas is captured in the container 1 as opposed to a cryogenic liquid.

$$P_{ec2} \times (V - v_d) = P_{ec1} \times (V - v_c) \qquad\qquad \text{Equation 1.}$$

Equation 1 can be rewritten as:

$$V = \quad (P_{ec1} \times v_c - P_{ec2} \times v_d) \ / \ (P_{ec1} - P_{ec2}) \qquad\qquad \text{Equation 2.}$$

The bellows receptacle 3 expands as the pump discharges the grabbed samples of natural gas to the bellows receptacle 3. As the bellows receptacle 3 expands, the internal volume and the internal pressure within the bellows receptacle 3 increases. In addition, the volume within the external chamber 2 decreases, by virtue of the bellows receptacle 3 taking up more space within the external chamber 2. Additionally, as the volume within the external chamber 2 decreases, the pressure within the external chamber 2 increases in inverse proportion. The increased pressure $P_{ec2}$ within the external chamber 2 when the bellows receptacle 3 is expanded, such that the desired amount of natural gas has been accumulated in the bellows receptacle 3, provides a counter pressure to the increased internal pressure $P_d$ within the bellows receptacle 3.

According to one example of the second embodiment, the bellows receptacle 3 has an external diameter $d_{br}$ of 317 mm and the external chamber 2 has an internal diameter $d_{ec}$ of 323.90 mm. In addition, the external chamber 2 has a length $l_{ec}$ of 9.62 mm and a total volume $V$ within the external chamber 2 of 789.26 cm$^3$. When in a fully compressed "locked" state, the bellows receptacle 3 has a length $l_c$ of 1.2 mm, an external volume $v_{ce}$ of 74 cm$^3$.

Prior to sampling the natural gas, the bellows receptacle 3 are flushed to remove any residual contamination. The pressure $P_c$ within the bellows receptacle 3, prior to sampling the natural gas, is at atmospheric pressure 0 barg (1 barA) and the pressure $P_{ec1}$ within the external chamber 2 is at 0.1 barg (1.1 barA), this is the minimum pressure needed to bring the bellows receptacle 3 into the compressed "locked" state. The volume $v_{ec1}$ within the external chamber 2 is V- $v_c$ (i.e., 789.26 - 74) = 715.26 cm$^3$. When in an expanded state, the bellows receptacle 3 has a length $l_d$ of 8.5 mm and a volume $v_d$ of 527 cm$^3$. Therefore, the volume $v_{ec2}$ within the external chamber 2 is V- $v_d$ (i.e., 789.26 - 527) = 262.26 cm$^3$.

Applying equation 1, $P_{ec2}$ x $(V- v_d) = P_{ec1}$ x $(V- v_c)$, $P_{ec2}$ x (789.26 - 527) = 1.1 x (789.26- 74). Therefore, $P_{ec2}$ = 3 barA (2 barg).

In addition, or alternatively, the ratio between the volume $v_{ec1}$ within the external chamber 2 when the bellows receptacle 3 is in the compressed state and the volume $v_{ec2}$ within the external chamber 2 when the bellows receptacle 3 is in the expanded state can be calculated: Ratio $V_r = v_{ec1} / v_{ec2}$ = 715.26 /262.26 = 2.73. Using the ratio $V_r$ and the pressure $P_{ec1}$ within the external chamber 2 when the bellows receptacle is in the compressed state, the pressure $P_{ec2}$ within the external chamber 2 may be calculated using equation 5.

$$P_{ec1} \text{ x } V_r = P_{ec2} \hspace{5cm} \text{Equation 5.}$$

For example, 1.1 x 2.73 = 3 barA. During expansion the increased pressure within the bellows receptacle 3 is counter balanced by the increased pressure within the external chamber 2.

The pump discharges gas sample grabs into the bellows receptacle 3 to increment the pressure up to the desired pressure, correlating the total volume transferred in process line. The container is sized such that the final pressure $P_{ec2}$ and the number of grabs can be adjusted depending on the volumes and duration of the transfer in the process lines.

It will be clear to one skilled in the art that many improvements and modifications can be made to the foregoing exemplary embodiments without departing from the scope of the claims.

## Claims

1. A method of capturing a sample of cryogenic liquid in a variable volume and variable pressure sampling container (1), the method comprising:

   inserting a variable volume and variable pressure sampling container (1) into a thermally insulated vacuum enclosure (210), the container (1) comprising a bellows receptacle (3) comprising an inlet valve (4) and an outlet valve (5), and a pressurised external chamber (2) surrounding the bellows receptacle (3), and connecting the inlet valve (4) of the container (1) to a process pipeline containing cryogenic liquid and the outlet valve (5) of the container (1) to vent or boil-off-gas;
   maintaining a first pressure ($P_{ec1}$) within the pressurised external chamber (2) during capture of a sample of cryogenic liquid, the first pressure ($P_{ec1}$) being greater than a second pressure ($P_c$) within the bellows receptacle (3) to maintain the bellows receptacle (3) in a compressed state;
   opening the inlet valve (4) and the outlet valve (5) of the container (1);
   cooling the bellows receptacle (3) of the container (1) from a first temperature to a second temperature, wherein the second temperature is a temperature of the cryogenic liquid in the process pipeline, by flowing the cryogenic liquid from the process pipeline into the bellows receptacle (3) through the inlet valve (4) and out of the bellows receptacle (3) through the outlet valve (5);
   determining that the cryogenic liquid flowing out of the outlet valve (5) is in a liquid phase; and
   closing the inlet valve (4) and the outlet valve (5) to capture a sample of cryogenic liquid in the bellows receptacle of the container (1).

2. The method of claim 1, further comprising:
   gradually breaking the vacuum in the enclosure to gradually increase the temperature of the captured sample and the temperature of the bellows receptacle from the second temperature to an ambient temperature, wherein the ambient temperature is greater than a boiling point temperature of the cryogenic liquid.

3. The method of claim 2, wherein as the temperature of the bellows receptacle exceeds the boiling point temperature of the cryogenic liquid, the method further comprises:
vaporizing the captured sample within the bellows receptacle, such that the captured sample transitions from the liquid phase to a gas phase within the bellows receptacle, causing the bellows receptacle to expand.

4. The method of claim 3, wherein vaporization of the captured sample within the bellows receptacle (3) increases the pressure within the bellows receptacle (3) from the second pressure ($P_c$) to a third pressure ($P_d$) and increases the pressure within the external chamber (2) from the first pressure ($P_{ec1}$) to a fourth pressure ($P_{ec2}$), the method further comprising:
counterbalancing the increased pressure ($P_d$) within the bellows receptacle (3) with the increased pressure ($P_{ec2}$) within the external chamber (2).

5. The method of claim 3 or claim 4, further comprising:
removing the container from the enclosure when the temperature of the captured sample and the temperature of the bellows receptacle has increased to the ambient temperature.

6. The method of any preceding claim, further comprising:
storing the captured sample in the gas phase within the bellows receptacle of the container.

7. The method of any preceding claim, wherein the inlet valve is connected to the process pipeline though a vacuum insulated take-off probe.

8. The method of any preceding claim, wherein the vent or boil-off-gas is at or near atmospheric pressure.

9. The method of any preceding claim, wherein the ambient temperature comprises room temperature.

10. A variable volume and variable pressure sampling container (1) for capturing a sample of cryogenic liquid, the container (1) comprising:

a bellows receptacle (3) comprising an inlet valve (4) and an outlet valve (5), wherein, in use, a sample of cryogenic liquid flows into the bellows receptacle (3) through the inlet valve (4) and is captured in the bellows receptacle (3); and
a pressurised external chamber (2) surrounding the bellows receptacle (3), wherein, a pressure within the pressurised external chamber (2) is maintained at a first pressure ($P_{ec1}$), the first pressure ($P_{ec1}$) being greater than a second pressure ($P_c$) within the bellows receptacle (3) and a process pressure of the cryogenic liquid to maintain the bellows receptacle (3) in a compressed state during capture of the sample of cryogenic liquid in the bellows receptacle (3).

11. The container of claim 10, further comprising:

an inlet connection between the inlet valve (4) and the bellows receptacle (3); and
an outlet connection between the outlet valve (5) and the bellows receptacle (3);
wherein changing a size of the inlet connection and the outlet connection changes an internal volume of the bellows receptacle (3).

12. The container of claim 10 or claim 11, wherein the bellows receptacle (3) is configured to capture between 6 - 8 cm$^3$ of the cryogenic liquid.

13. The container of any one of claims 10 to 12, wherein the bellows receptacle (3) is configured to expand to an expanded state within the pressurised external chamber (2) when the captured sample of cryogenic liquid vaporises and transitions from liquid phase to gas phase within the bellows receptacle (3), and wherein the second pressure ($P_c$) within the bellows receptacle (3) increases to a third pressure ($P_d$) and the first pressure ($P_{ec1}$) within the external chamber (2) increases to a fourth pressure ($P_{ec2}$) when the sample vaporises and wherein the fourth pressure ($P_{ec2}$) within the external chamber (2) counterbalances the third pressure ($P_d$) within the bellows receptacle (3) as the sample vaporises.

**14.** The container of any one of claims 10 to 13, further comprising:

a bellows receptacle pressure transmitter configured to measure the pressure within the bellows receptacle (3) and

an external chamber pressure transmitter configured to measure the pressure within the external chamber (2).

**15.** A thermally insulated vacuum enclosure comprising:

the container of any one of claims 10 to 14;
a flow indicator for determining a liquid phase of the sample;
a viscosity detector for determining a viscosity of the sample; and
a vacuum pump configured to create a vacuum within the vacuum enclosure,
wherein the container is removable from the enclosure.

**Patentansprüche**

**1.** Verfahren zum Erfassen einer Probe einer kryogenen Flüssigkeit in einem Probenahmebehälter (1) mit variablem Volumen und variablem Druck, wobei das Verfahren umfasst:

Einführen eines Probenahmebehälters (1) mit variablem Volumen und variablem Druck in ein thermisch isoliertes Vakuumgehäuse (210), wobei der Behälter (1) einen Balgbehälter (3) umfasst, der ein Einlassventil (4) und ein Auslassventil (5) umfasst, sowie eine druckbeaufschlagte Außenkammer (2), die den Balgbehälter (3) umgibt, und Verbinden des Einlassventils (4) des Behälters (1) mit einer Prozessrohrleitung, die kryogene Flüssigkeit enthält, und des Auslassventils (5) des Behälters (1) mit einer Entlüftung oder Boil-off-Gas;
Aufrechterhalten eines ersten Drucks ($P_{ec1}$) innerhalb der druckbeaufschlagten Außenkammer (2) während des Erfassens einer Probe kryogener Flüssigkeit, wobei der erste Druck ($P_{ec1}$) größer ist als ein zweiter Druck ($P_c$) innerhalb des Balgbehälters (3), um den Balgbehälter (3) in einem komprimierten Zustand zu halten;
Öffnen des Einlassventils (4) und des Auslassventils (5) des Behälters (1);
Kühlen des Balgbehälters (3) des Behälters (1) von einer ersten Temperatur auf eine zweite Temperatur, wobei die zweite Temperatur eine Temperatur der kryogenen Flüssigkeit in der Prozessrohrleitung ist, durch Fließenlassen der kryogenen Flüssigkeit aus der Prozessrohrleitung durch das Einlassventil (4) in den Balgbehälter (3) und durch das Auslassventil (5) aus dem Balgbehälter (3) heraus;
Bestimmen, dass die durch das Auslassventil (5) herausfließende kryogene Flüssigkeit in einer Flüssigphase ist; und
Schließen des Einlassventils (4) und des Auslassventils (5), um eine Probe kryogener Flüssigkeit im Balgbehälter des Behälters (1) zu erfassen.

**2.** Verfahren nach Anspruch 1, ferner umfassend:
schrittweises Belüften des Vakuums im Gehäuse, um die Temperatur der erfassten Probe und die Temperatur des Balgbehälters schrittweise von der zweiten Temperatur auf eine Umgebungstemperatur zu erhöhen, wobei die Umgebungstemperatur größer ist als eine Siedepunkttemperatur der kryogenen Flüssigkeit.

**3.** Verfahren nach Anspruch 2, wobei, wenn die Temperatur des Balgbehälters die Siedepunkttemperatur der kryogenen Flüssigkeit überschreitet, das Verfahren ferner umfasst:
Verdampfen der erfassten Probe innerhalb des Balgbehälters, sodass die erfasste Probe innerhalb des Balgbehälters von der Flüssigphase in eine Gasphase übergeht, wodurch der Balgbehälter expandiert.

**4.** Verfahren nach Anspruch 3, wobei die Verdampfung der erfassten Probe innerhalb des Balgbehälters (3) den Druck innerhalb des Balgbehälters (3) vom zweiten Druck ($P_c$) auf einen dritten Druck ($P_d$) erhöht und den Druck innerhalb der Außenkammer (2) vom ersten Druck ($P_{ec1}$) auf einen vierten Druck ($P_{ec2}$) erhöht, wobei das Verfahren ferner umfasst:
Ausgleichen des erhöhten Drucks ($P_d$) innerhalb des Balgbehälters (3) mit dem erhöhten Druck ($P_{ec2}$) innerhalb der Außenkammer (2).

**5.** Verfahren nach Anspruch 3 oder Anspruch 4, ferner umfassend: Entnehmen des Behälters aus dem Gehäuse, wenn die Temperatur der erfassten Probe und die Temperatur des Balgbehälters auf die Umgebungstemperatur angestiegen ist.

6. Verfahren nach einem der vorhergehenden Ansprüche, ferner umfassend:
Aufbewahren der erfassten Probe in der Gasphase innerhalb des Balgbehälters des Behälters.

7. Verfahren nach einem der vorhergehenden Ansprüche, wobei das Einlassventil mit der Prozessrohrleitung durch eine vakuumisolierte Entnahmesonde verbunden ist.

8. Verfahren nach einem der vorhergehenden Ansprüche, wobei die Entlüftung oder das Boil-off-Gas bei oder nahe dem Atmosphärendruck ist.

9. Verfahren nach einem der vorhergehenden Ansprüche, wobei die Umgebungstemperatur Raumtemperatur umfasst.

10. Probenahmebehälter (1) mit variablem Volumen und variablem Druck zum Erfassen einer Probe einer kryogenen Flüssigkeit, wobei der Behälter (1) umfasst:

einen Balgbehälter (3), der ein Einlassventil (4) und ein Auslassventil (5) umfasst, wobei im Betrieb eine Probe kryogener Flüssigkeit durch das Einlassventil (4) in den Balgbehälter (3) fließt und im Balgbehälter (3) erfasst wird; und
eine druckbeaufschlagte Außenkammer (2), die den Balgbehälter (3) umgibt, wobei ein Druck innerhalb der druckbeaufschlagten Außenkammer (2) auf einem ersten Druck ($P_{ec1}$) aufrechterhalten wird, wobei der erste Druck ($P_{ec1}$) größer ist als ein zweiter Druck ($P_c$) innerhalb des Balgbehälters (3) und ein Prozessdruck der kryogenen Flüssigkeit, um den Balgbehälter (3) während des Erfassens der Probe kryogener Flüssigkeit im Balgbehälter (3) in einem komprimierten Zustand zu halten.

11. Behälter nach Anspruch 10, ferner umfassend:

einen Einlassanschluss zwischen dem Einlassventil (4) und dem Balgbehälter (3); und
einen Auslassanschluss zwischen dem Auslassventil (5) und dem Balgbehälter (3);
wobei eine Änderung einer Größe des Einlassanschlusses und des Auslassanschlusses ein Innenvolumen des Balgbehälters (3) ändert.

12. Behälter nach Anspruch 10 oder Anspruch 11, wobei der Balgbehälter (3) dazu ausgelegt ist, zwischen 6 - 8 cm$^3$ der kryogenen Flüssigkeit zu erfassen.

13. Behälter nach einem der Ansprüche 10 bis 12, wobei der Balgbehälter (3) dazu ausgelegt ist, innerhalb der druckbeaufschlagten Außenkammer (2) in einen expandierten Zustand zu expandieren, wenn die erfasste Probe kryogener Flüssigkeit verdampft und innerhalb des Balgbehälters (3) von der Flüssigphase in die Gasphase übergeht, und wobei der zweite Druck ($P_c$) innerhalb des Balgbehälters (3) auf einen dritten Druck ($P_d$) ansteigt und der erste Druck ($P_{ec1}$) innerhalb der Außenkammer (2) auf einen vierten Druck ($P_{ec2}$) ansteigt, wenn die Probe verdampft, und wobei der vierte Druck ($P_{ec2}$) innerhalb der Außenkammer (2) den dritten Druck ($P_d$) innerhalb des Balgbehälters (3) ausgleicht, wenn die Probe verdampft.

14. Behälter nach einem der Ansprüche 10 bis 13, ferner umfassend:

einen Balgbehälter-Druckübertrager, der dazu ausgelegt ist, den Druck innerhalb des Balgbehälters (3) zu messen, und
einen Außenkammer-Druckübertrager, der dazu ausgelegt ist, den Druck innerhalb der Außenkammer (2) zu messen.

15. Thermisch isoliertes Vakuumgehäuse, umfassend:

den Behälter nach einem der Ansprüche 10 bis 14;
einen Durchflussanzeiger zum Bestimmen einer Flüssigphase der Probe;
einen Viskositätsdetektor zum Bestimmen einer Viskosität der Probe; und
eine Vakuumpumpe, die dazu ausgelegt ist, ein Vakuum innerhalb des Vakuumgehäuses zu erzeugen,
wobei der Behälter aus dem Gehäuse entnehmbar ist.

**Revendications**

1. Procédé de prélèvement d'un échantillon de liquide cryogénique dans un récipient d'échantillonnage à volume et pression variables (1), le procédé comprenant :

   l'insertion d'un récipient d'échantillonnage à volume et pression variables (1) dans une enceinte sous vide isolée thermiquement (210), le récipient (1) comprenant un réceptacle à soufflet (3) muni d'une vanne d'entrée (4) et d'une vanne de sortie (5), et une chambre externe sous pression (2) entourant le réceptacle à soufflet (3), et le raccordement de la vanne d'entrée (4) du récipient (1) à une canalisation de procédé contenant du liquide cryogénique et le raccordement de la vanne de sortie (5) du récipient (1) à un gaz d'évent ou à un gaz d'évaporation ;
   le maintien à une première pression ($P_{ec1}$) à l'intérieur de la chambre externe sous pression (2) pendant le prélèvement d'un échantillon de liquide cryogénique, la première pression ($P_{ec1}$) étant supérieure à une deuxième pression ($P_c$) à l'intérieur du réceptacle à soufflet (3) afin de maintenir le réceptacle à soufflet (3) dans un état comprimé ;
   l'ouverture de la vanne d'entrée (4) et de la vanne de sortie (5) du récipient (1) ;
   le refroidissement du réceptacle à soufflet (3) du récipient (1) d'une première température à une deuxième température, la deuxième température étant la température du liquide cryogénique dans la canalisation de procédé, en faisant s'écouler le liquide cryogénique depuis la canalisation de procédé dans le réceptacle à soufflet (3) à travers la vanne d'entrée (4) et hors du réceptacle à soufflet (3) à travers la vanne de sortie (5) ;
   la détermination que le liquide cryogénique s'écoulant hors de la vanne de sortie (5) est en phase liquide; et
   la fermeture de la vanne d'entrée (4) et de la vanne de sortie (5) pour prélever un échantillon de liquide cryogénique dans le réceptacle à soufflet du récipient (1).

2. Procédé selon la revendication 1, comprenant en outre :
   la rupture progressive du vide dans l'enceinte afin d'augmenter progressivement la température de l'échantillon capturé et la température du réceptacle à soufflet, de la deuxième température jusqu'à la température ambiante, cette dernière étant supérieure à la température d'ébullition du liquide cryogénique.

3. Procédé selon la revendication 2, dans lequel, lorsque la température du réceptacle à soufflet dépasse la température d'ébullition du liquide cryogénique, le procédé comprend en outre :
   la vaporisation de l'échantillon capturé à l'intérieur du réceptacle à soufflet, de telle sorte que l'échantillon capturé passe de la phase liquide à la phase gazeuse à l'intérieur du réceptacle à soufflet, provoquant ainsi l'expansion du réceptacle à soufflet.

4. Procédé selon la revendication 3, dans lequel la vaporisation de l'échantillon capturé à l'intérieur du réceptacle à soufflet (3) augmente la pression à l'intérieur du réceptacle à soufflet (3) de la deuxième pression ($P_c$) à une troisième pression ($P_d$) et augmente la pression à l'intérieur de la chambre externe (2) de la première pression ($P_{ec1}$) à une quatrième pression ($P_{ec2}$), le procédé comprenant en outre :
   la compensation de la pression accrue ($P_d$) à l'intérieur du réceptacle à soufflet (3) par la pression accrue ($P_{ec2}$) à l'intérieur de la chambre externe (2).

5. Procédé selon la revendication 3 ou la revendication 4, comprenant en outre :
   l'enlèvement du récipient de l'enceinte lorsque la température de l'échantillon prélevé et celle du réceptacle à soufflet ont atteint la température ambiante.

6. Procédé selon l'une quelconque des revendications précédentes, comprenant en outre :
   le stockage de l'échantillon capturé en phase gazeuse à l'intérieur du réceptacle à soufflet du récipient.

7. Procédé selon l'une quelconque des revendications précédentes, dans lequel la vanne d'entrée est reliée à la canalisation de procédé par l'intermédiaire d'une sonde de prélèvement isolée sous vide.

8. Procédé selon l'une quelconque des revendications précédentes, dans lequel le gaz d'évent ou d'évaporation est à la pression atmosphérique ou proche de celle-ci.

9. Procédé selon l'une quelconque des revendications précédentes, dans lequel la température ambiante comprend la température ambiante de la pièce.

**10.** Récipient d'échantillonnage à volume et pression variables (1) destiné à prélever un échantillon de liquide cryogénique, le récipient (1) comprenant :

un réceptacle à soufflet (3) comprenant une vanne d'entrée (4) et une vanne de sortie (5), dans lequel, en utilisation, un échantillon de liquide cryogénique s'écoule dans le réceptacle à soufflet (3) par la vanne d'entrée (4) et est capturé dans le réceptacle à soufflet (3) ; et

une chambre externe sous pression (2) entourant le réceptacle à soufflet (3), dans laquelle la pression à l'intérieur de la chambre externe sous pression (2) est maintenue à une première pression ($P_{ec1}$), la première pression ($P_{ec1}$) étant supérieure à une deuxième pression ($P_c$) à l'intérieur du réceptacle à soufflet (3) et à une pression de traitement du liquide cryogénique afin de maintenir le réceptacle à soufflet (3) dans un état comprimé pendant la capture de l'échantillon de liquide cryogénique dans le réceptacle à soufflet (3).

**11.** Le récipient selon la revendication 10, comprenant en outre :
un raccord d'entrée entre la vanne d'entrée (4) et le réceptacle à soufflet (3) ; et un raccord de sortie entre la vanne de sortie (5) et le réceptacle à soufflet (3) ; dans lequel la modification de la taille du raccord d'entrée et du raccord de sortie modifient le volume interne du réceptacle à soufflet (3).

**12.** Le récipient selon la revendication 10 ou la revendication 11, dans lequel le réceptacle à soufflet (3) est configuré pour contenir entre 6 et 8 cm$^3$ de liquide cryogénique.

**13.** Récipient selon l'une quelconque des revendications 10 à 12, dans lequel le réceptacle à soufflet (3) est configuré pour se dilater jusqu'à un état dilaté à l'intérieur de la chambre externe sous pression (2) lorsque l'échantillon capturé de liquide cryogénique se vaporise et passe de la phase liquide à la phase gazeuse à l'intérieur du réceptacle à soufflet (3), et dans lequel la deuxième pression ($P_c$) à l'intérieur du réceptacle à soufflet (3) augmente jusqu'à une troisième pression ($P_d$) et la première pression ($P_{ec1}$) à l'intérieur de la chambre externe (2) augmente jusqu'à une quatrième pression ($P_{ec2}$) lorsque l'échantillon se vaporise et dans lequel la quatrième pression ($P_{ec2}$) à l'intérieur de la chambre externe (2) contrebalance la troisième pression ($P_d$) à l'intérieur du réceptacle à soufflet (3) lorsque l'échantillon se vaporise.

**14.** Le récipient selon l'une quelconque des revendications 10 à 13, comprenant en outre :

un transmetteur de pression du réceptacle à soufflet configuré pour mesurer la pression à l'intérieur du réceptacle à soufflet (3) et

un transmetteur de pression de la chambre externe configuré pour mesurer la pression à l'intérieur de la chambre externe (2).

**15.** Enceinte sous vide isolée thermiquement comprenant :

le récipient selon l'une quelconque des revendications 10 à 14 ;

un indicateur de débit pour déterminer la phase liquide de l'échantillon ;

un détecteur de viscosité destiné à déterminer la viscosité de l'échantillon ; et

une pompe à vide configurée pour créer un vide à l'intérieur de l'enceinte sous vide, dans laquelle le récipient est amovible de l'enceinte.

Fig. 1

Fig. 2

Fig. 3

Vacuum enclosure
210

BOG 240

Orifice
280

Differential pressure &
temperature indicator 270

flow indicator
220

Vacuum hose
200

viscosity detector
230

Valves 4, 5

Coupling

Coupling

Compressed

Container
1

Extension

Expansion
indicator

100

Vacuum
pump
250

PI

Pressure
control valve
260

Fig. 4

Fig. 5

Fig. 6A

Fig. 6B

Fig. 6C

340

RTD

330

1

310

320

300

Fig. 7

LAB. GC

VAPORIZATION

LIQUID PHASE
BELLOWS RECEPTACLES

GAS CONTAINERS

ONLINE
GC

LIQUID

VAPO

VAPORISER

GAS

PROBE

AUTOSAMPLER

SAMPLING TAKE-OFF POINT

Fig. 8

EP 4 445 113 B1

GRAB PUMP

AIR MOTOR

NATURAL GAS

PT 1

PT 2

Flushing

IA

COMPRESSION

CHAMBER

BOG

Natural gas variable pressure
and variable volume container

# Fig. 9

## Constant pressure cylinder

—o— Volume of gas (N.cm3) @ P=4barA

## Variable Pressure and Variable volume cylinder

—— Amount of substance n (mol) = Mass g /MR

Fig. 10

EP 4 445 113 B1

Insert variable volume and variable pressure
container into vacuum enclosure
S101

↓

Open inlet and outlet valves
S102

↓

Cool bellows receptacle
S103

↓

Is the sample at outlet valve in liquid state?
S104 → NO
S106

↓

YES
S105

↓

Close inlet and outlet valves
S107

↓

Break vacuum in vacuum enclosure & remove
container
S108

↓

Vaporise cryogenic sample
S109

↓

Store sample in gas phase
S110

Fig. 11

Fig. 12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019144791 A1
- US 20180283994 A1

- WO 2012080619 A1